Europäisches Patentamt

European Patent Office

Office européen des brevets

(11) Publication number: **0 336 279**
**A2**

## (12) EUROPEAN PATENT APPLICATION

(21) Application number: **89105549.3**

(22) Date of filing: **29.03.89**

(51) Int. Cl.⁴: **G06F 15/40**

(30) Priority: **31.03.88 JP 78770/88**

(43) Date of publication of application:
**11.10.89 Bulletin 89/41**

(84) Designated Contracting States:
**DE FR GB NL**

(71) Applicant: **Kabushiki Kaisha Toshiba**
**72, Horikawa-cho Saiwai-ku**
**Kawasaki-shi(JP)**

(72) Inventor: **Muramatsu, Atsushi**
**c/o Patent Division Kabushiki Kaisha**
**Toshiba**
**1-1 Shibaura 1-chome Minato-ku Tokyo**
**105(JP)**

(74) Representative: **Henkel, Feiler, Hänzel &**
**Partner**
**Möhlstrasse 37**
**D-8000 München 80(DE)**

(54) **Data processing apparatus using identifying data for information retrieval.**

(57) An optical disc (17) stores image data. The image data is stored in four strata, cabinet, binder, document, and page. The image data is managed by management data including a cabinet name, binder name, and document name. The management data is provided in association with password codes (PC) assigned to individuals, respectively, and is stored in a magnetic disc device 19. The password code and designation data (DD) make up identification data (ID). When identification data ID is entered from a keyboard (13), the management data related to the password code (PC) of the data (ID) is read out from the magnetic disc (19). Of the read out management data, the data as designated by the designation data (DD) is displayed by a display (26).

F I G. 1

## Data processing apparatus using identifying data for information retrieval

The present invention relates to a data processing apparatus for retrieving desired information by using identification data, and more particularly to a data processing apparatus operable at a high speed for storage and retrieval of information.

A data processing apparatus for storing, retrieving and outputting a large amount of information is disclosed in USP 4,636,848. This type of data processing apparatus uses retrieval data for storing and retrieving the data of information. The retrieval data are not classified for assignment for individuals, or operators.

Additionally, the retrieval data, which is displayed on a display screen at the time of storage and retrieval, has a fixed format common to all operators where the retrieval information displayed contains some items of information, which are necessary for some operators, but unnecessary for others. Therefore, an operator must select his desired items of information from among the retrieval information, hindering quick storage and retrieval of information by the operator.

Accordingly, an object of the present invention is to provide a data processing apparatus which presents only items of information necessary for the operator who is currently operating the apparatus, thereby improving information storage and retrieval operations.

To achieve the above object, there is provided a data processing apparatus comprising first memory means for storing information to be processed, means for displaying the information from the first memory means, second memory means for storing processing data for retrieving the information from the first memory means, the processing data having a plurality of classification commands, means for inputting a designation data for designating one of the classification commands of the processing data, and means for retrieving a classification command designated by the inputting means from the second memory means so as to display the classification command designated by the inputting means on the displaying means during initial display operation.

This invention can be more fully understood from the following detailed description when taken in conjunction with the accompanying drawings, in which:

Fig. 1 is a block diagram showing an embodiment of a data processing apparatus according to the present invention;

Fig. 2 is a diagram showing a structure of files stored in an optical disc;

Fig. 3 is an explanatory view for explaining identification data;

Fig. 4 is an explanatory view of the relationship between a password code and various data stored in an optical disc;

Fig. 5 is an explanatory view for explaining relationships between designation data and their contents;

Figs. 6A through 6D are flowcharts useful in explaining an operation of the data processing apparatus of Fig. 1;

Fig. 7 is a block diagram showing a major part of a data processing apparatus according to another embodiment of the present invention;

Fig. 8 is a flowchart showing an operation of the data processing apparatus of Fig. 7, and

Figs. 9 and 10 are explanatory views for explaining other identification data.

An embodiment of a data processing apparatus according to the present invention will be described in detail with reference to the accompanying drawings.

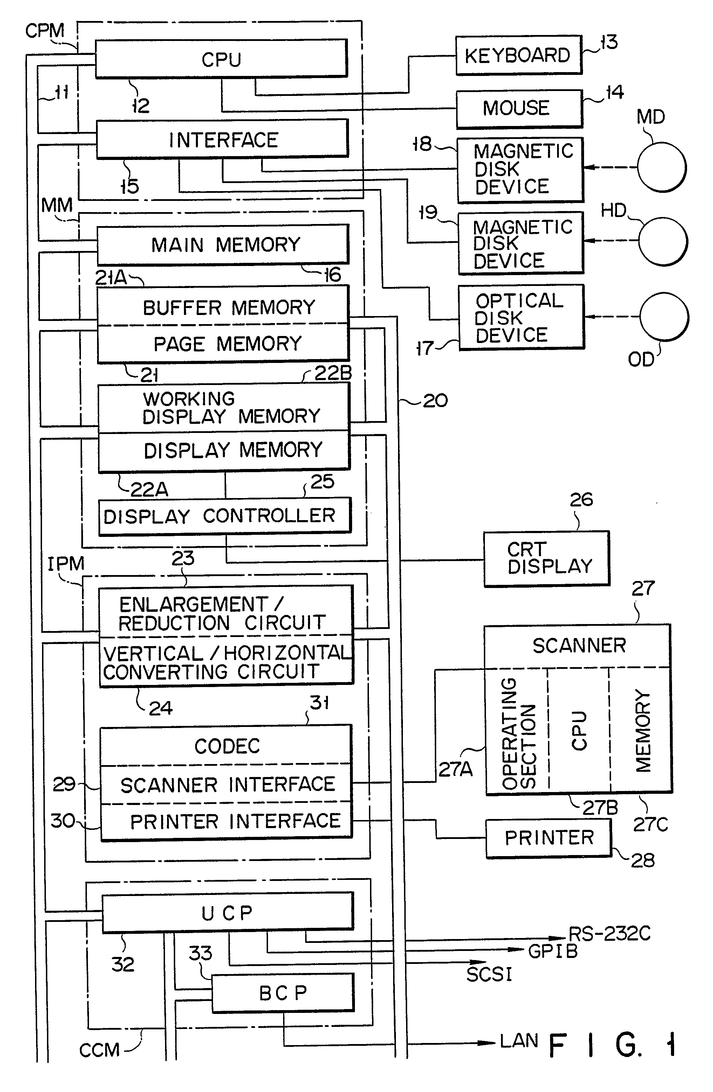

In Fig. 1, a system bus 11 is connected to a control module CPM and a communication control module CCM. The system bus 11 is also connected to a memory module MM and an image processing module IPM along with an image bus 20. In the control module CPM, the system bus 11 couples the CPU 12 with an interface 15. The CPU 12 controls the overall system of the data processing apparatus, and is able to execute a multi-task operation. The CPU 12 is connected with a keyboard 13 for entering various data including command data, and a mouse 14 as a pointing device. The mouse 14 is for moving a cursor on the screen of a CRT display 26, and has first and second buttons (not shown) to designate a cursor position, for example.

The interface 15 is connected to an optical disc device 17, and magnetic disc devices 18 and 19. In use, an optical disc OD is loaded into the optical disc device 18, and stores image data. Similarly, the magnetic disc device 18 as a floppy disc device, for example, when used, is loaded with a floppy disc FD. The magnetic disc device 19 as a hard disc device, for example, is to be loaded with a hard disc HD. These magnetic disc devices 18 and 19 are for storing retrieval data for retrieving image data stored in the optical disc OD, and display data necessary for the retrieval (processing data).

The memory module MM has a main memory 16 coupled with the system bus 11, a page memory 21 connected between the system bus 11 and image bus 20, a buffer memory 21A, display memory 22A, working display memory 22B, and display controller 25 connected to the display memory 22A.

The main memory 16 stores an operation program of the CPU 12. The page memory 21 stores the image data as read by an optical scanner 27 to be given later, and the image data as processed by an enlargement/reduction circuit 23. The buffer memory 21A, which is provided as a part of the page memory 21, stores the data read out from the optical disc device 17. The display memory 22A and the working display memory 22B store the display data. The display controller 25 is coupled with a CRT display 26. The data stored in the display memory 22A is displayed by the CRT display 26 under control of the display controller 25.

The image processing module IPM has the enlargement/reduction circuit 23 coupled with the system bus 11 and the image bus 20, vertical/horizontal converting circuit 24, an encoder/decoder (CODEC) 31 connected to the vertical/horizontal converting circuit 24, and a scanner interface 29 and printer interface 30, contained in the CODEC 31. The scanner interface 29 is coupled with a scanner (two-dimensional scanner) 27, and the printer interface to a printer 28.

The enlargement/reduction circuit 23 enlarges and reduces the size of the image data supplied from the page memory 21. The vertical/horizontal converting circuit 24 rotates the image data supplied from the page memory 21 by $90^\circ$ on the display screen. The CODEC 31 encodes the image data transferred via the scanner interface from the scanner 27 under a predetermined encoding rule, and decodes the code data from the page memory 21 and supplies it to the printer 28 via the printer interface 30.

The scanner 27 optically scans an original placed on a document table (not shown), to collect the pictorial data from the original and to output the collected one in the form of electrical signals. The scanner 27, so functioning, is made up of an operating section 27A for entering various parameters (processing data) such as size and the optical density of a document to be read, and the read density of the document, a CPU 27B for controlling the scanner 27, and a memory 27C for storing various parameters as set by the operating section 27A.

The printer 27 prints out the image data as read by the scanner 27 and the image data read out from the optical disc 17.

The communication control module CCM has a UCP (universal communication processor) 32 coupled with the system bus 11, and a BCP (business communication processor) 33 coupled with the UCP 32. The UCP 32 is an interface for RS-232C, GPIB, and SCSI, and the BCP 33 an interface for LAN (local area network).

The optical disk OD, which is to be set in the optical disc device 17, will be described.

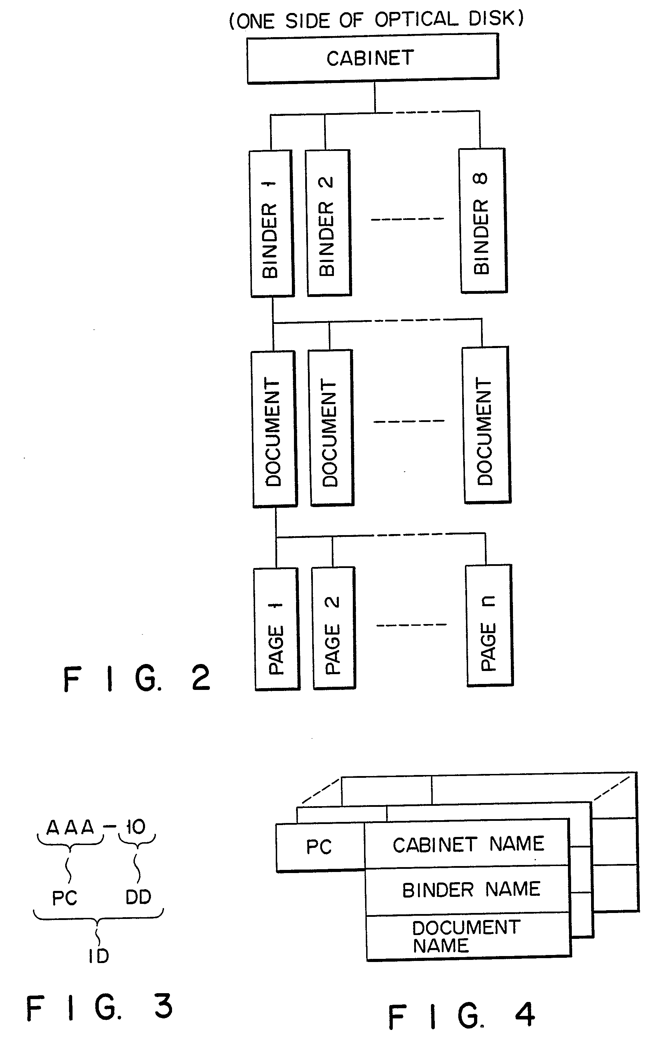

Fig. 2 shows the configuration of a memory area of the optical disc OD. The optical disc OD is four strata, cabinet, binder, document, and page. The cabinet is assigned to one side of the optical disc OD and may contain a maximum of eight binders, each binder containing a maximum of 30,000 documents. Each document has a title, the title of which is defined for each binder. The document serves as a fundamental unit of a file. In addition to the title, a note (explanation of the document) may be attached to each document, which may consist of a maximum of 4095 pages. Document management data are set up for the cabinets, binders, and documents, for managing those items. The document management data may be cabinet names, binder names, and document names.

The magnetic disc device 19 stores identification data for identification of individuals, or operators.

Fig 3 shows the structure of identification data ID. The ID data is made up of password code PC and designation data DD. The password code PC is prestored in the magnetic disc device 19. When the code PC is stored, the cabinet name, binder name, and document name which are required for the operator bearing the code PC, are stored in association with the code PC. Thus, cabinet names, binder names and document names in association with the codes PC are stored in the magnetic disc, as shown in Fig. 4.

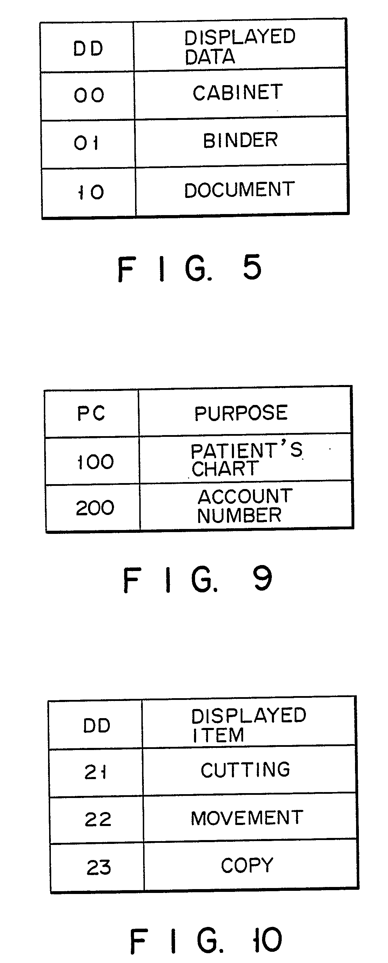

The designation data DD indicates from what display screen an operator stores or retrieves data. The relationships between codes of the data DD and their contents are as shown in Fig. 5.

For "00" of the data DD, a data display starts at cabinet data; for "01", it starts at binder data; for "10" it starts at document data. An operator properly selects any of those codes, as required.

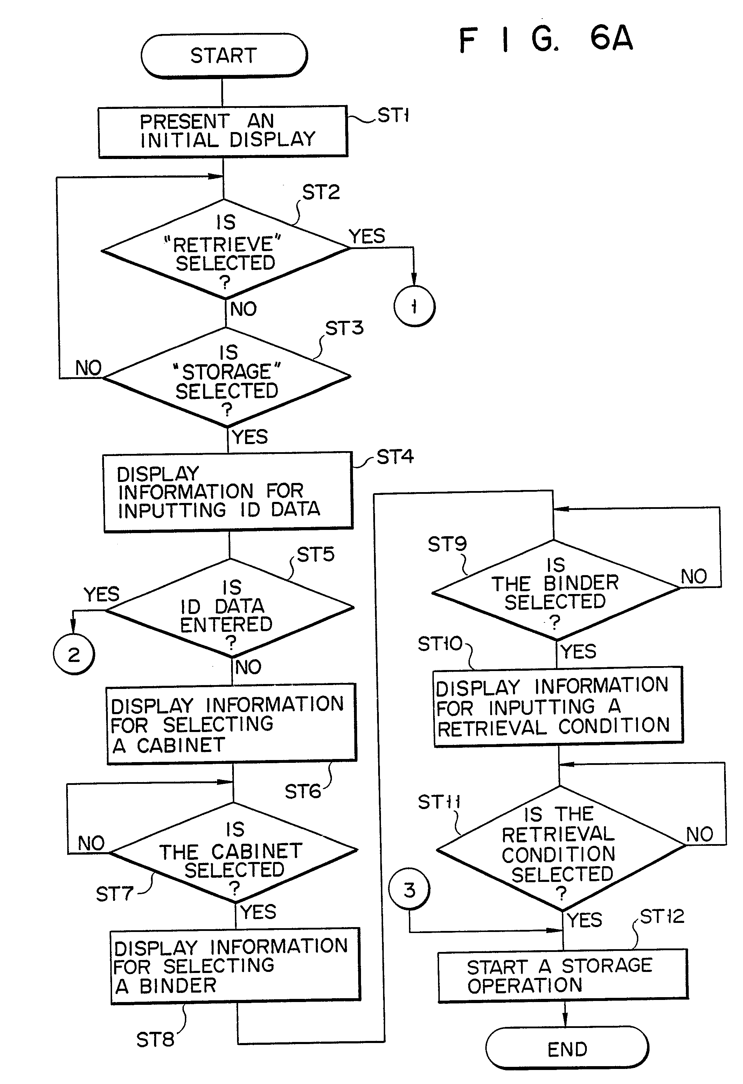

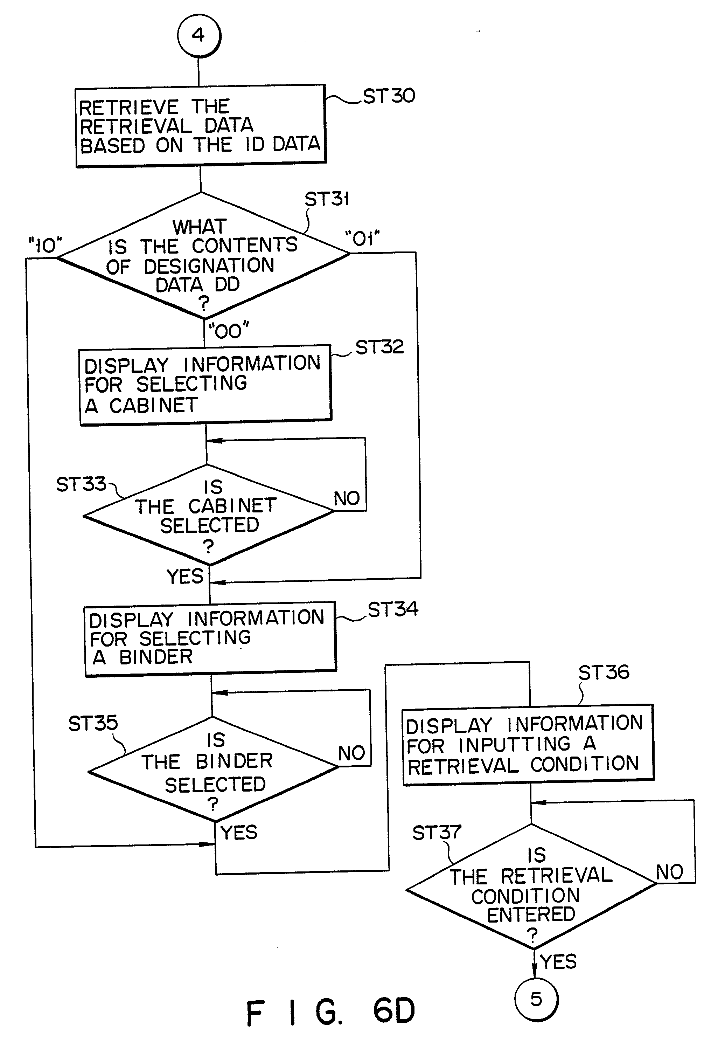

The operation of the data processing apparatus will be described with reference to Figs. 6A through 6D.

The words of "Storage" and "Retrieval" are displayed on the screen of the display 26 (step ST1). From the display, an operator selects item "Storage", for example, by the keyboard 13 or mouse 14 (steps ST2 and ST3). Then, the display 26 presents a message requesting the entering of identification data ID on the screen (step ST4). If the data ID is not entered, the CPU 12 executes a sequence of normal storing processing steps (steps ST5 and ST6).

In this sequence, the CRT display 26 displays a message requesting the selection of a cabinet (step ST6). If the cabinet is selected (step ST7), a message requesting the selection of a binder is displayed (step ST8). If an intended binder is selected (step ST9), a message requesting the entering of retrieval conditions is displayed (step ST10). If the necessary retrieval condition (retrieval title) is entered (step ST11), the storing operation starts (step ST12). In this operation, the image information on a document is optically read by the scanner 27. The image data derived from the scanner 27 is stored into the page memory 21 via the interface 29 and CODEC 31. The image data is read out of the page memory 21, and stored into the optical disc OD set in the optical disc device 17, by way of the interface 15.

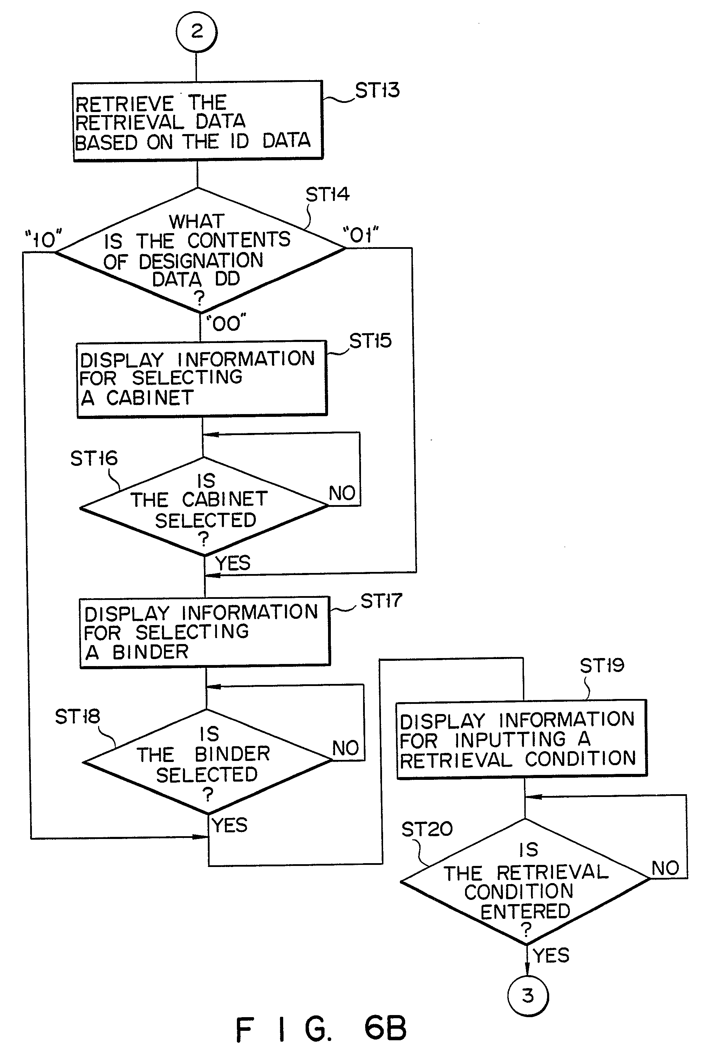

If in the step ST5 the CPU 12 decides that identification data ID has been entered, the CPU 12 retrieves the cabinet name, binder name and document name associated with the entered data ID from the magnetic disc 19 in which those have been stored (step ST13, Fig. 6B). Thereafter, the CPU 12 checks the designation data DD contained in the identification data ID, and displays the contents of the designation data DD on the display device 26 (step ST14).

When the designation data DD is "00", the CRT display 26 displays the cabinet names associated with the retrieved password code PC and a message requesting the selection of an intended cabinet name from among them (step ST15). Under* this display condition, if the intended cabinet name is designated (step ST16), display 26 displays the binder names contained in the designated cabinet and a message requesting the selection of an intended binder name from among them (step ST17). Under this display condition, if the intended binder name is designated (step ST18), a message requesting the entering of an intended retrieval condition (step ST19). After seeing this, an operator enters his intended retrieval condition (step ST20) and, in response, the CPU 12 executes the data storing operation (step ST12).

When in step ST14, the CPU 12 judges that the entered designation data DD is "01", the binder name select display is displayed, rather than the cabinet name select display, thus bypassing steps ST14 through ST17.

Further, when in step ST14, the designation data DD is "10", the display 26 displays a message requesting the entering of the retrieval condition, bypassing the display of the messages requesting the selection of cabinet name and binder name (steps ST14 through ST19). of the page memory 21, and stored into the optical disc OD set in the optical disc device 17, by way of the interface 15.

If in the step ST5 the CPU 12 decides that identification data ID has been entered, the CPU 12 retrieves the cabinet name, binder name and document name associated with the entered data ID from the magnetic disc 19 in which those have been stored (step ST13, Fig. 6B). Thereafter, the CPU 12 checks the designation data DD contained in the identification data ID, and displays the contents of the designation data DD on the display device 26 (step ST14).

When the designation data DD is "00", the CRT display 26 displays the cabinet names associated with the retrieved password code PC and a message requesting the selection of an intended cabinet name from among them (step ST15). Under this display condition, if the intended cabinet name is designated (step ST16), display 26 displays the binder names contained in the designated cabinet and a message requesting the selection of an intended binder name from among them (step ST17). Under this display condition, if the intended binder name is designated (step ST18), a message requesting the entering of an intended retrieval condition (step ST19). After seeing this, an operator enters his intended retrieval condition (step ST20) and, in response, the CPU 12 executes the data storing operation (step ST12).

When in step ST14, the CPU 12 judges that the entered designation data DD is "01", the binder name select display is displayed, rather than the cabinet name select display, thus bypassing steps ST14 through ST17.

Further, when in step ST14, the designation data DD is "10", the display 26 displays a message requesting the entering of the retrieval condition, bypassing the display of the messages requesting the selection of cabinet name and binder name (steps ST14 through ST19).

Meanwhile, also when the "retrieval" is designated on the initial display, a sequence of operations similar to that above is executed.

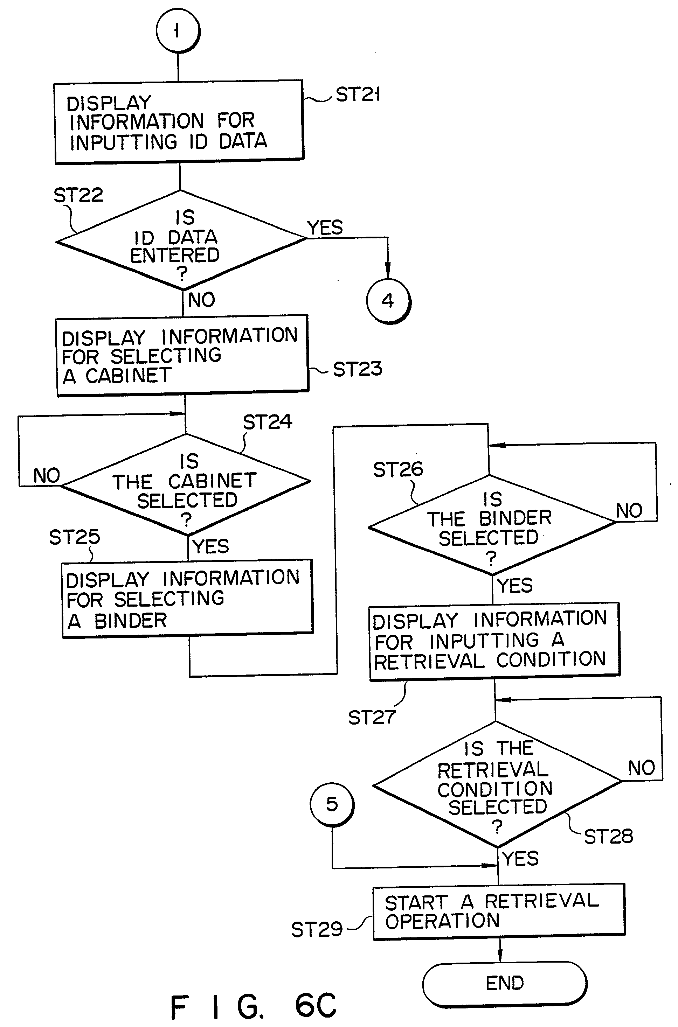

If in step ST2, the "retrieval" is selected, the display presents a message requesting the entering of identification data ID on the screen (step ST21, Fig. 6C). If the data ID is not entered (step ST22), the CPU 12 displays the messages requesting the selection of cabinet name, binder name and retrieval condition in successive order (steps ST23 to ST27). When an intended retrieval condition (retrieval title) is entered (step ST28), a sequence of retrieval operations starts (step ST29). In this sequence, the image data satisfying the retrieval condition is read out from the optical disk device 17 and the retrieved data is stored into the page memory 21 via the interface 15. The image data is read out therefrom, passed through the display memory 22A and display controller 25, and reaches the CRT display 26.

If in step ST21, identification data ID has been entered, the CPU 12 retrieves the cabinet name, binder name and document name associated with the password code PC of the entered data ID from the magnetic disc 19 in which they have been stored (step ST30,) Thereafter, the CPU 12 checks the designation data DD and in accordance with the contents of the data DD, executes the display of the message requesting the cabinet name, binder name or retrieval condition (steps ST31 to ST36). In the display presenting the retrieval condition entering message, if an operator enters his intended retrieval condition (step ST37), the above retrieval operation will be executed (step ST29).

As seen from the foregoing description, the data processing apparatus according to the present invention is featured in that the processing data to first be displayed in a retrieval mode and a storing mode may be set up by using the designation data DD contained in the identification data ID. On the other hand, in the conventional data processing apparatus, the retrieval or storing operation mode must always start at the selection of a cabinet name. In this respect, the data processing apparatus according to the present invention can execute the retrieval and storing operations more quickly.

An additional feature of the present invention resides in that each operator has his own password code PC, and the names associated with his password code PC are respectively assigned to the cabinet, binder and document in which information belonging to the operator is field. With this feature, if an operator enters his identification data ID, the CPU 12 searches the names of cabinet, binder and/or document as preset in association with his password code PC contained in the entered identification data ID, and displays those names in accordance with the designation data DD also contained in the identification data ID. It is noted here that those displayed names are only for the data concerning the operator himself. Therefore, the operator may quickly and directly pick up his intended data without being confused by other unnecessary data, which is inevitably displayed in the conventional data processing apparatus of this type.

Further, with the feature using the password code, a person who is permitted to access the stored data is only the person whose password code is associated with that stored data. In other words, a person who does not know a password code cannot access the data stored associated with that password code. This fact explicitly indicates that secrecy of private data can be secured.

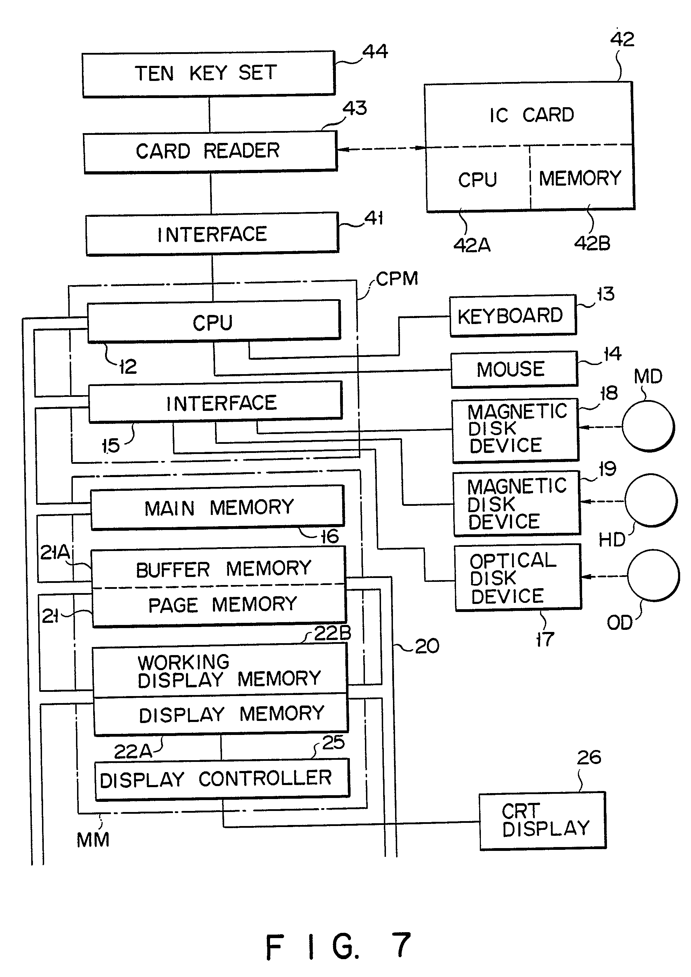

Another embodiment of a data processing apparatus according to the present invention will be described with reference to Figs. 7 through 10. Particularly in Fig. 7, like symbols are used to designate like or equivalent portions in Fig. 1.

In Fig 7, the CPU 12 is coupled with a card reader 43 for reading the data in an IC card 42, through an interface 41. The card reader 43 is coupled with a data entry means, for example, a key set 44 containing a set of ten keys. The IC card 42 contains a CPU 42 and a memory 42B for storing a password code ID.

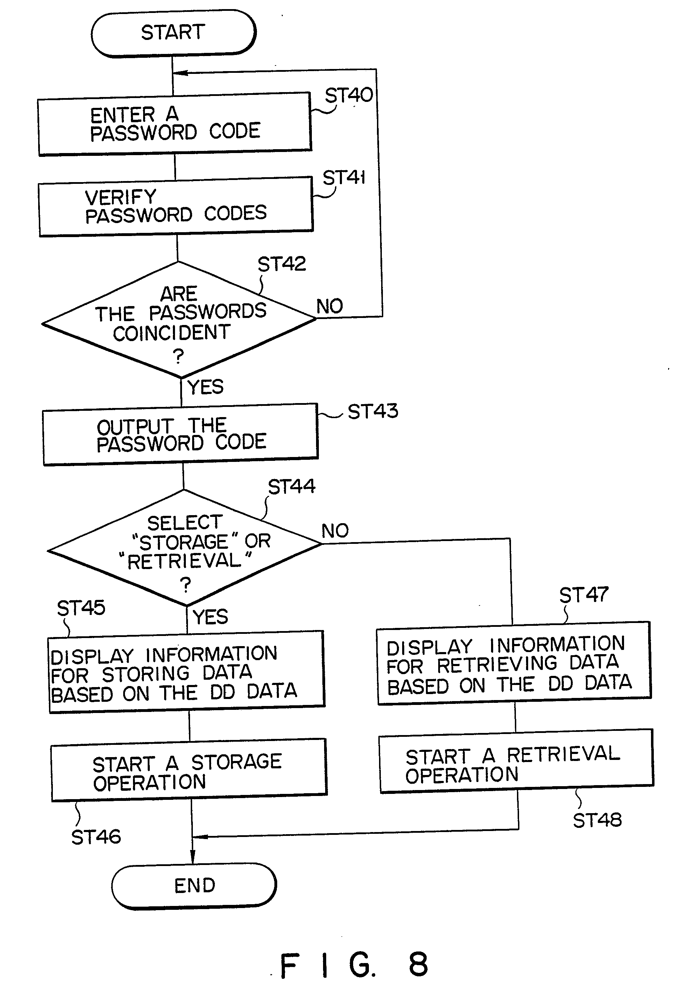

The operation of the data processing apparatus adaptable for the data entry from IC cards will be described with reference to Fig. 8.

To start, an operator sets his IC card in the data processing apparatus. Then, he enters his password code PC by the ten key set 44 (step ST40). The password code PC is transferred to the IC card 42, from the card reader 43. In the IC card 42, the CPU 42A verifies if the entered password code PC is coincident with the stored one (step ST41). If the answer is YES, viz., they coincide, the CPU 42A permits access to the data (step ST42), and outputs the identification code ID from the memory 42B to the card reader 43. The ID data is transferred to the CPU 12, through the card reader 43 and the interface 41 (step ST43).

The operator selects the "Retrieval" or "Storage" by means of the keyboard 13 or the mouse 14 (step ST44). The CPU 12 searches the names of cabinet, binder and/or document in accordance with the password code DD contained in the ID data entered, and selects a display to be given first in accordance with the designation data DD also contained in the ID data (steps ST45 and ST47). Then, the CPU 12 executes the retrieval or storing operation, as already stated (steps ST46 and ST48).

In the second embodiment, the identification data ID is stored in the IC card and the verification of coincidence of the entered password data and the stored password data function enhances the security of private data.

In the second embodiment as mentioned above, the password code for identifying an individual, which is entered by the ten key set 44, is selected to be the same as the password code contained in the identification data ID. Alternatively, the password code may be stored in the memory 42B of the IC card 42, in addition to the identification data ID. In this case, when the password code in the memory 42B of the IC card is coincident with a password code entered from the ten key set 44, the CPU 42A reads out the identification data ID from the memory 42B, and transfers it to the CPU 12.

In the embodiments as mentioned above, the password code contained in the identification data is used as data for identifying an individual. If required, it may be used for identifying the purpose to which the data processing apparatus is applied.

For example, the password code may be used for identifying a patient,s chart in the medical field or an account number in banks, as shown in Fig. 9.

By using the password code, a chart of a desired patient may be retrieved and a prepared patient's chart may be stored. In banks, quick and smooth banking business can be realized by applying such password codes for the account numbers. The operations subsequent to entering a password code, such as the display of data based on the user's purpose, and the display of cabinet, binder and document data, are successively performed in similar ways to those mentioned above.

The data processing apparatus will not start the data processing operation until it receives correct Dassword data. Therefore, the secrecy of the data stored in the optical disc may be reliably kept.

The data processing apparatus, which has been applied for information retrieval and storage, may also be applied for the edition of image data, if necessy. In this case, various edition commands, such as cutting, movement, and copy, are stored in the designation data of the identification data, as shown in Fig. 10. This structure may improve the efficiency of the editing operation.

## Claims

1. A data processing apparatus, characterized by:
first memory means (17) for storing information to be processed;
means (26) for displaying the information from the first memory means (17);
second memory means (19) for storing processing data for retrieving the information from the first memory means (17), the processing data having a plurality of classification commands;
means (13) for inputting a designation data for designating one of the classification commands of the processing data; and
means (12) for retrieving a classification command designated by the inputting means (13) from the second memory means (19) so as to display the classification command designated by the inputting means on the displaying means (26) during initial display operation.

2. The apparatus according to claim 1, characterized in that the first memory means (17) has an optical memory means (OD).

3. The apparatus according to claim 1, characterized in that the inputting means (13) has a portable recording medium (42).

4. A data processing apparatus for retrieving data from a memory, characterized by:
means (19) for storing processing data for retrieving data from the memory (17) and identification data for identifying an operator, the processing data having a plurality of classification commands associated with the identification data;

and means (13) for inputting the identification data; and
means (12) for retrieving classification commands of the processing data associated with the identification data input by the inputting means (13) from the storing means (19).

5. A data processing apparatus, characterized by:
optical memory means (17) for storing information to be processed;
means (26) for displaying information from the optical memory means (17);
main memory means (16) for storing processing data for retrieving information from the optical memory means (17) and identification data for identifying an operator, the processing data having a plurality of classification commands associated with the identification data;
means (13) for inputting identification data, the inputting means (13) having a portable recording means (42) for recording identification data; and
means (12) for retrieving classification commands of the processing data associated with the identification data input by the inputting means (13) from the main memory means (16) so as to display the classification command designated by the inputting means on the displaying means (26) during initial display operation.

6. The apparatus according to claim 5, characterized in that said portable recording means has IC card (42).

F I G. 1

(ONE SIDE OF OPTICAL DISK)

F I G. 2

F I G. 3

F I G. 4

| DD | DISPLAYED DATA |
|----|----------------|
| OO | CABINET |
| O1 | BINDER |
| 1O | DOCUMENT |

# F I G. 5

| PC | PURPOSE |
|----|---------|
| 100 | PATIENT'S CHART |
| 200 | ACCOUNT NUMBER |

# F I G. 9

| DD | DISPLAYED ITEM |
|----|----------------|
| 21 | CUTTING |
| 22 | MOVEMENT |
| 23 | COPY |

# F I G. 10

F I G. 6A

F I G. 6B

① 

DISPLAY INFORMATION FOR INPUTTING ID DATA — ST21

ST22 — IS ID DATA ENTERED ? — YES → ④

NO

DISPLAY INFORMATION FOR SELECTING A CABINET — ST23

ST24 — IS THE CABINET SELECTED ? — NO

YES

ST25 — DISPLAY INFORMATION FOR SELECTING A BINDER

ST26 — IS THE BINDER SELECTED ? — NO

YES

DISPLAY INFORMATION FOR INPUTTING A RETRIEVAL CONDITION — ST27

IS THE RETRIEVAL CONDITION SELECTED ? — NO — ST28

⑤ → YES

ST29 — START A RETRIEVAL OPERATION

END

F I G.  6C

F I G. 6D

F I G. 7

EP 0 336 279 A2

START

ENTER A
PASSWORD CODE — ST40

VERIFY
PASSWORD CODES — ST41

ST42
ARE
THE PASSWORDS
COINCIDENT
?                    NO

YES

OUTPUT THE
PASSWORD CODE — ST43

ST44
SELECT
"STORAGE" OR
"RETRIEVAL"
?                    NO

ST45                              ST47

YES

DISPLAY INFORMATION        DISPLAY INFORMATION
FOR STORING DATA           FOR RETRIEVING DATA
BASED ON THE DD DATA       BASED ON THE DD DATA

START A STORAGE            START A RETRIEVAL
OPERATION                  OPERATION

ST46                                        ST48

END

F I G. 8